Europäisches Patentamt

European Patent Office

Office européen des brevets

(11) Veröffentlichungsnummer: **0 234 490 B1**

## EUROPÄISCHE PATENTSCHRIFT

(45) Veröffentlichungstag der Patentschrift: **03.06.92**

(21) Anmeldenummer: **87102271.1**

(22) Anmeldetag: **18.02.87**

(51) Int. Cl.⁵: **B60K 31/04**

(54) **Geschwindigkeitsbegrenzer für Kraftfahrzeuge.**

(30) Priorität: **22.02.86 DE 3605764**

(43) Veröffentlichungstag der Anmeldung:
**02.09.87 Patentblatt 87/36**

(45) Bekanntmachung des Hinweises auf die
Patenterteilung:
**03.06.92 Patentblatt 92/23**

(84) Benannte Vertragsstaaten:
**DE FR GB IT**

(56) Entgegenhaltungen:
**EP-A- 0 154 459          DE-A- 3 025 836**
**DE-A- 3 130 099          DE-A- 3 436 245**
**DE-A- 3 441 070          DE-A- 3 535 924**

(73) Patentinhaber: **Mannesmann Kienzle GmbH**
**Heinrich-Hertz-Strasse**
**W-7730 Villingen-Schwenningen(DE)**

(72) Erfinder: **Fichter, Manfred, Ing. grad.**
**Aigenstrasse 8**
**W-7744 Königsfeld 2(DE)**
Erfinder: **Mutz, Gerhard, Ing. grad.**
**Waldstrasse 29**
**W-7734 Brigachtal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Geschwindigkeitsbegrenzer für Kraftfahrzeuge mit einem von einem Stellmotor angetriebenen Stellglied, welches über Koppelmittel unabhängig von einer Betätigung des Gaspedals im Sinne einer Veränderung des Gaspedalhubes auf die Kraftstoffzumeßvorrichtung des betreffenden Kraftfahrzeuges einwirkt, sowie mit einem elektronischen Regler, welcher über zwei getrennte, dem Hoch-und Rücklauf des Stellmotors zugeordnete Kanäle ein fahrtabhängiges Ansteuern einer Betriebsschaltung des Stellmotors bewirkt (DE-A1-3 025 836).

Im allgemeinen stehen sowohl die wirtschaftliche als auch die verkehrstechnische Zweckmäßigkeit solcher besonders für den nachträglichen Einbau geeigneter Geschwindigkeitsbegrenzer auch beim fahrenden Personal außer Zweifel, zumal solche Geschwindigkeitsbegrenzer, insbesondere wenn verschiedene Begrenzungsgeschwindigkeiten wählbar sind, den Berufsfahrer bei seiner oft stundenlangen, monotonen Fahrtätigkeit im Grenzbereich der für den befahrenen Straßentyp zulässigen Geschwindigkeit von der ständigen Kontrolle der Geschwindigkeit seines Fahrzeuges entlasten.

Dennoch ist die Bereitschaft für den freiwilligen Einbau von Geschwindigkeitsbegrenzern relativ gering. Als Ursache für diese abwartende und letzten Endes ablehnende Haltung kommt jedoch weniger in Betracht, daß Geschwindigkeitsbegrenzer den individuellen Fahrstilspielraum einengen und das Nachrüsten eines Fahrzeuges einen mehr oder weniger umständlichen und zeitraubenden Eingriff darstellt, sondern vielmehr die Tatsache, daß die bisher üblichen Geschwindigkeitsbegrenzer aufgrund des weiten Anwendungsfeldes, d. h. aufgrund der Vielzahl von Fahrzeugtypen und somit der erheblich streuenden Fahrzeugparameter, aber auch aufgrund ständig wechselnder, topografisch und beladungsbedingter Betriebsparameter den Erwartungen bezüglich der Relation Kosten - Regelkomfort nicht gerecht werden. Entscheidend ist in diesem Zusammenhang die Wahl des Stellmotors, die aus Kostengründen bestenfalls an Motordaten, insbesondere einer Motorzeitkonstante, orientiert sein kann, die einer Durchschnittsleistung entsprechen.

Dieser Kostenkompromiß bedeutet, daß die für die Stellaggregate der üblichen Geschwindigkeitsbegrenzer verwendeten Stellmotore prinzipbedingt eine erhöhte Mindestanlaufspannung benötigen und somit kurze und sehr kurze, relativ kleinen Regelabweichungen entsprechende Regelsignale nicht im Sinne einer Einstellbewegung verarbeiten können, wodurch der Vorteil der Impulssteuerung, bei der durch Ändern des Tastverhältnisses die Stellgeschwindigkeit der Regelabweichung anpaßbar ist, teilweise verloren geht, so daß die Gefahr besteht, daß die Regelung instabil wird und der Regelkreis überschwingt. Hinzu kommt, daß aufgrund der vorgegebenen Einbauverhältnisse, d. h. durch unterschiedliche Gashübe gekennzeichnete Gasbetätigungssysteme der Fahrzeuge und durch die jeweiligen Einbau- und Ankopplungsmöglichkeiten der Stellaggregate einerseits beispielsweise über ein Schub-Zug-Kabel unmittelbar am Verstellhebel der Einspritzpumpe, andererseits mittels eines in ein Gasgestänge eingefügten, federbelasteten Stellzylinders sowie möglicherweise durch reibungsintensive Umlenkungen in den Gasbetätigungssystemen die Stellmotore Regelstrecken mit unterschiedlichsten Lastmomenten gerecht werden müssen.

Der kompromißbehaftete Stellantrieb und die erheblichen Lastunterschiede in der Regelstrecke führen bei relativ großer Fahrzeugmasse zu noch akzeptablen, relativ langsamen, bei stark motorisierten und beispielsweise unbeladenen Fahrzeugen jedoch zu unangenehm kurzen und harten Regelschwingungen. Auf der anderen Seite ist es bekannt, daß sich ein derartiges instabiles Verhalten eines Regelkreises dadurch beseitigen läßt, daß dafür gesorgt wird, daß die Regelstrecke dem Regelsignal bzw. jedem auch noch so kurzen Regelsignal folgt.

Ausgehend von dieser Erkenntnis lag der vorliegenden Erfindung die Aufgabe zugrunde, die Akzeptanz für einen Geschwindigkeitsbegrenzer gemäß dem Gattungsbegriff dadurch zu erhöhen, daß unter Beibehaltung des bisher üblichen, kostengünstigen Stellmotors mit möglichst einfachen Mitteln eine Verbesserung des Regelkomforts erzielt wird.

Die Lösung dieser Aufgabe sieht vor, daß jedem vom elektronischen Regler ausgehenden Kanal ein durch die Regelsignale steuerbares und in bezug auf den Stellmotor eine Mindestanlaufspannung schaltendes Zeitglied zugeordnet ist.

Ein bevorzugtes Ausführungsbeispiel der Erfindung ist dadurch gekennzeichnet, daß in jedem Kanal ein monostabiler Multivibrator und ein diesem nachgeschaltetes ODER-Gatter derart eingefügt sind, daß der eine Eingang des ODER-Gatters mit dem Ausgang des Multivibrators und der andere Eingang parallel mit dem Eingang des Multivibrators mit dem Ausgang eines dem jeweiligen Kanal zugeordneten Verstärkers des elektronischen Reglers verknüpft ist und daß den Multivibratoren Mittel zum Variieren der Impulsdauer zugeordnet sind.

Die erfindungsgemäße Lösung gestattet es, daß der Stellmotor auch sehr kurze Regsignale verarbeiten kann, d. h. daß an dem Stellmotor aufgrund der erfindungsgemäßen "Impulsübersetzung" auch bei kleinen bzw. kurzzeitigen Regelabweichungen, die jeweils auch zu Beginn von größeren Regelabweichungen auftreten, bereits beim ersten Regelsignal ein Steuerimpuls anliegt, der eine für den Anlauf des Stellmotors erforderliche Mindestimpulsbreite aufweist. Auf diese Weise wird eine verzögerungsfreie Stellbewegung erzielt und ein Überschwingen des Regelkreises vermieden. Ein weiterer Vorteil ist es, daß die Verwirklichung der erfindungsgemäßen Lösung lediglich ein Minimum an technischem Aufwand erfordert, daß bereits installierte Geschwindigkeitsbegrenzerohne Schwierigkeiten nachgerüstet werden können und daß eine Anpassung der Mindestanlaufspannung an die jeweilige Regelstrecke vor Ort auf sehr einfache Weise, beispielsweise durch Betätigen eines Potentiometers, vorgenommen werden kann.

Im folgenden sei die Erfindung anhand der beigefügten Zeichnungen näher erläutert. Es zeigen

FIG. 1 ein Systemschema eines Geschwindigkeitsbegrenzers,

FIG. 2 ein Schaltungsbeispiel zur Ansteuerung des Stellmotors,

FIG. 3 Impulsdiagramme,

Fig. 4 ein Schaltbild des Verlaufs der Betriebsspannung des Stellmotors.

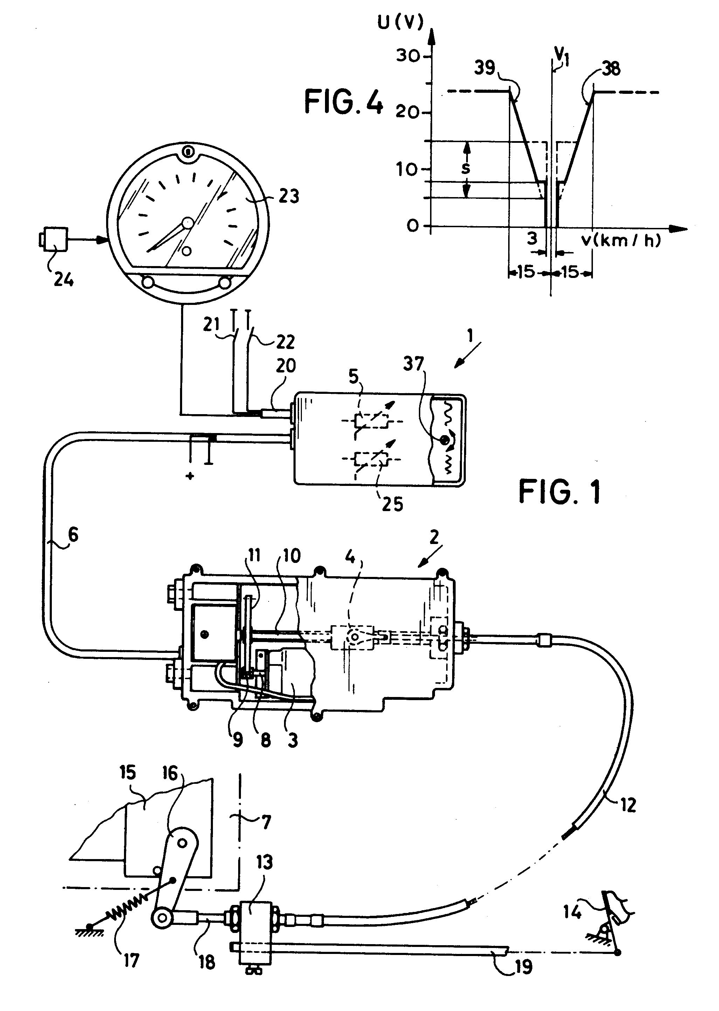

Wie das Systemschema FIG. 1 zeigt, besteht ein Geschwindigkeitsbegrenzer der im Oberbegriff genannten Gattung aus im wesentlichen zwei Komponenten, einem vorzugsweise im Fahrerhaus des betreffenden Fahrzeuges installierten, beispielweise zweiteiligen Gehäuse (1), in welchem unter anderem der elektronische Regler des Geschwindigkeitsbegrenzers untergebracht ist, und einem in geeigneter Weise am Fahrzeugchassis in Motornähe befestigten Stellaggregat, das ebenfalls ein zweiteiliges Gehäuse (2) aufweist, welches unter anderem einen Stellmotor (3) und ein von diesem betätigtes Stellglied (4) beinhaltet. Aufgabe des elektronischen Reglers ist es, um dies der Vollständigkeit halber zu erwähnen, einen beispielsweise mittels eines Potentiometers (5) fest eingestellten Geschwindigkeitswert, die Begrenzungsgeschwindigkeit,mit der tatsächlichen Geschwindigkeit des Fahrzeuges zu vergleichen und spätestens beim Überschreiten der eingestellten Begrenzungsgeschwindigkeit dem Stellmotor (3) über einen die Steuerleitungen umfassenden Leitungsstrang (6) Impulse im Sinne einer Drosselung des Fahrzeugmotors (7) zuzuführen. In diesem Falle verstellt der Stellmotor (3), auf dessen Motorwelle (8) ein Ritzel (9) befestigt ist, das mit einem auf einer Gewindespindel (10) befestigten Zahnrad (11) in Eingriff steht, das Stellglied (4) und betätigt ein Schub-Zug-Kabel (12), dessen eines Ende mit dem Stellglied (4) gekuppelt ist. Das andere Endes des Schub-Zug-Kabels (12) ist an einem Koppelelement (13) befestigt, welches in das zwischen Gaspedal (14) und einem einer in der Einspritzpumpe (15) des Fahrzeugmotors (7) befindlichen Kraftstoffzumeßvorrichtung zugeordneten Verstellhebel (16) vorgesehene und unter der Wirkung einer Rückstellfeder (17) stehende Gasgestänge (18, 19) eingefügt ist.

Eingangsseitig ist der elektronische Regler des Geschwindigkeitsbegrenzers über ein Leitungsbündel (20) verknüpft mit Schaltern (21 und 22) sowie mit einem Fahrtschreiber (23), dem in an sich üblicher Weise ein Drehwertgeber (24) zugeordnet ist. Dabei dient der im allgemeinen im Armaturenbrett des Fahrzeuges angeordnete Schalter (21) dazu, einen zweiten, mittels eines weiteren Potentiometers (25) einstellbaren Geschwindigkeitsgrenzwert anzuwählen. Der Schalter (22) ist der Fahrzeugkupplung zugeordnet und dient beispielsweise der Gasfreigabe bei Fahrzeugen mit nicht synchronisierten Getrieben, während der Fahrtschreiber (23) - vorausgesetzt er ist hierfür ausgerüstet - den Fahrzeugdaten entsprechende, d. h. Drehzahl-Weg gewandelte Geschwindigkeitsmeßimpulse liefert.

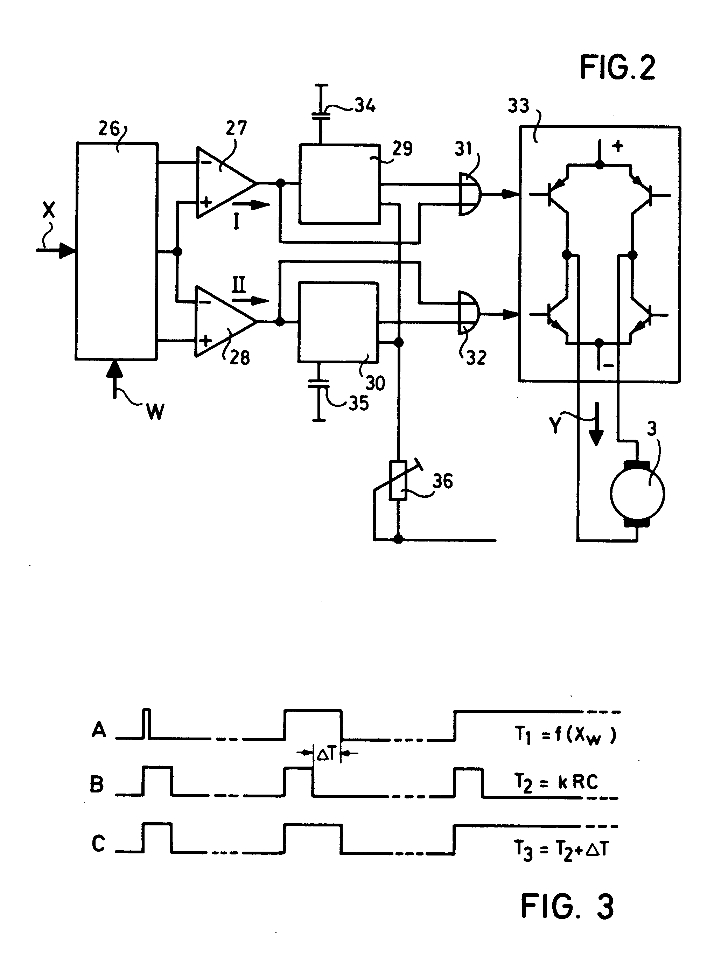

Gemäß FIG. 2 ist mit (26) der Schaltungsteil des Reglers bezeichnet, mittels dessen die Regelgröße (X), die tatsächliche Geschwindigkeit des Fahrzeuges, mit der Führungsgröße (W), einer die Begrenzungsgeschwindigkeit repräsentierenden Referenzspannung, in an sich bekannter Weise verglichen und die Regelabweichung ($X_w$) gebildet wird, die aufgrund einer in geeigneter Weise erfolgenden Modulation der Regelgröße (X) durch zeitlich sehr verschiedene Signale, d. h. von sehr kurzen bis zu Dauersignalen, gekennzeichnet sein kann. Zwei dem Schaltungsteil (26) des Reglers nachgeschaltete Verstärker (27 und 28) dienen zusammen mit einer entsprechenden Beschaltung der Trennung der Regelsignale in solche, die den Hochlauf des Stellmotors (3) und solche, die dessen Rücklauf steuern. Die beiden Verstärker (27 und 28) eröffnen für die Übertragung der Regelsignale jeweils einen Kanal (I, II), in welchem ein monostabiler Multivibrator (29 bzw. 30) und ein ODER-Gatter (31 bzw. 32) derart eingefügt sind, daß der eine Eingang eines ODER-Gatters (31) mit dem Ausgang des im gleichen Kanal (I) befindlichen Multivibrators (29) und der andere Eingang des ODER-Gatters (31), parallel mit dem Eingang des Multivibrators (29), mit dem Ausgang des betreffenden Verstärkers (27) verknüpft sind. Den beiden Kanälen ist, wie FIG. 2 ferner zeigt, eine an sich bekannte, die Stellgröße Y liefernde Betriebsschaltung (33) für den Stellmotor (3) nachgeschaltet. Außerdem sind den beiden mit Kondensatoren (34 und 35) beschalteten Multivibratoren (29 und 30) ein Potentiometer (36) zugeordnet, dessen Einstellschraube (37) in FIG. 1 in dem aufgebrochenen Gehäuse (1) des Reglers sichtbar ist. Denkbar ist auch, daß den Multivibratoren (29 und 30) mittels eines Schalters anwählbare Festwiderstände zugeordnet sind.

Erfindungsgemäß wird mit dem Potentiometer (36) die Anlaufspannung des Stellmotors (3) entsprechend dem Leistungsbedarf eingestellt. Bei zu harter Regelung, d. h. bei kurzen, unangenehmen Regelschwingungen des Fahrzeuges wird die Einstellschraube in Richtung des langwelligen Symbols, bei zu weicher Regelung mit langen Regelschwingungen und Geschwindigkeitsüberschreitungen >3 km/h in Richtung des kurzwelligen Symbols verstellt.

Von den in FIG. 3 dargestellten Impulsdiagrammen zeigt die Diagrammspur A die an den Ausgängen der Verstärker (27 und 28) erscheinenden Regelsignale, deren Impulsdauern $T_1$ gleich ist $f(X_w)$. In der Diagrammspur B sind die von den monostabilen Multivibratoren (29 und 30) generierten Impulse dargestellt, deren Impulsdauern $T_2$ sich aus $k \cdot R \cdot C$ ermitteln, wobei C den Kondensatoren (34 und 35) entspricht und R mittels des Potentiometers (36) einstellbar ist. Die Impulse der Multivibratoren (29, 30) werden somit durch die Betätigung des Potentiometers (36) derart abgestimmt, daß sie unter den gegebenen Voraussetzungen der Regelstrecke nach Integration im Stellmotor einer Anlaufspannung entsprechen. Dadurch wird erreicht, daß auch das kürzeste Regelsignal einen Anlauf des Stellmotors (3) bewirken kann. Die Diagrammspur C zeigt die an den Ausgängen der Gatter (31 und 32) anstehenden Impulse, deren Impulsdauer $T_3$ gleich ist $T_2 + \Delta T$ bzw. gleich ist $T_1$, wenn $T_1$ größer bzw. gleich ist $T_2$.

Den Verlauf der Betriebsspannung des Stellmotors (3) zeigt das Diagramm FIG. 4. Dabei kennzeichnet der eine Ast (38) des Diagramms den Spannungsverlauf beim Hochlaufen des Stellmotors (3), was einer Gaswegnahme entspricht, der andere Ast (39) denjenigen beim Zurücklaufen des Stellmotors (3), wodurch das Gaspedal (14) freigegeben wird. Wie aus dem Diagramm ersichtlich, ist im Bereich einer gewählten Begrenzungsgeschwindigkeit $V_1$ zwischen Hoch- und Rücklauf des Stellmotors (3) ein Totbereich von ca. 3 km/h vorgesehen, um unter anderem zu vermeiden, daß der Stellmotor (3) in seiner Drehrichtung ständig umgesteuert wird und der Stellantrieb frühzeitig verschleißt. Wird dieser Totbereich durch weitere Zunahme der Fahrzeuggeschwindigkeit überschritten, so wird beim Erscheinen eines ersten, im allgemeinen sehr kurzen Regelsignals dem Stellmotor (3) die eingestellte - der mögliche Einstellbereich ist mit (s) bezeichnet - regelstreckenabhängige Anlaufspannung,beispielsweise 8 V, aufgeschaltet. Die Betriebsspannung bleibt bei weiterer Zunahme der Fahrzeuggeschwindigkeit solange konstant, bis die Impulsdauer der Regelsignale $T_1$ gleich ist der mittels des Potentiometers (36) eingestellten Impulsdauer des Multivibrators (29 bzw. 30). Bei weiterem Ansteigen der Fahrzeuggeschwindigkeit steigt dann die Betriebsspannung des Stellmotors (3) innerhalb eines bestimmten Geschwindigkeitsbereichs von bis zu 15 km/h bis zum Erreichen der maximalen Betriebsspannung von 24 V und damit der größtmöglichen Verstellgeschwindigkeit des Stellmotors (3) kontinuierlich an. Der gleiche Ablauf der Aufschaltung der Betriebsspannung des Stellmotors (3) erfolgt auch bei Verzögerung des Fahrzeuges. Der Vollständigkeit halber sei noch erwähnt, daß, um Beschädigungen des Stellaggregates zu vermeiden, die Hochlauf- und Rücklauf-Endstellungen des Stellmotors (3) durch geeignete, vom Stellglied (4) betätigbare Schalter festgelegt sind.

## Patentansprüche

1. Geschwindigkeitsbegrenzer für Kraftfahrzeuge mit einem von einem Stellmotor (3) angetriebenen Stellglied (4), welches über Koppelmittel (13) unabhängig von einer Betätigung des Gaspedals (14) Sinne einer Veränderung des Gaspedalhubes auf die Kraftstoffzumeßvorrichtung (15) des betreffenden Kraftfahrzeuges einwirkt, sowie mit einem elektronischen Regler, welcher über zwei getrennte, dem Hoch- und Rücklauf des Stellmotors (3) zugeordnete Kanäle (I, II) ein fahrtabhängiges Ansteuern einer Betriebsschaltung (33) des Stellmotor (3) bewirkt,
   dadurch gekennzeichnet,
   daß jedem vom elektronischen Regler ausgehenden Kanal (I, II) ein durch die Regelsignale steuerbares und in bezug auf den Stellmotor (3) eine Mindestanlaufspannung schaltendes Zeitglied (29, 30) zugeordnet ist.

2. Geschwindigkeitsbegrenzer nach Anspruch 1,
   dadurch gekennzeichnet,
   daß in jedem Kanal (I, II) ein monostabiler Multivibrator (29 bzw. 30) und ein diesem nachgeschaltetes ODER-Gatter (31 bzw. 32) derart eingefügt sind, daß der eine Eingang des ODER-Gatters (31 bzw. 32) mit dem Ausgang des Multivibrators (29 bzw. 30) und der andere Eingang parallel mit dem Eingang des Multivibrators (29 bzw. 30) mit dem Ausgang eines dem jeweiligen Kanal (I bzw. II) zugeordneten Verstärkers (27 bzw. 28) des elektronischen Reglers verknüpft ist.

3. Geschwindigkeitsbegrenzer nach Anspruch 2,
   dadurch gekennzeichnet,
   daß den Multivibratoren (29, 30) Mittel (36, 37) zum Variieren der Impulsdauer zugeordnet sind.

## Claims

1. Speed-limiting means for motor vehicles, having a servo element (4) which is driven by a servo motor (3) and which acts, by way of coupling means (13), independently of an actuation of the accelerator (14) so as to alter the accelerator stroke upon the fuel metering device (15) of the motor vehicle concerned, and having an electronic regulator which, by way of two separate channels (I, II) associated with the ascending and returning travel of the servo motor (3), effects a motion-dependent control of an operating circuit (33) of the servo motor (3), characterized in that there is associated with each channel (I, II) going out from the electronic regulator a timer element (29, 30) which may be controlled by the regulating signals and which triggers a minimum starting voltage with respect to the servo motor (3).

2. Speed-limiting means according to Claim 1, characterized in that there are inserted in each channel (I, II) a monostable multivibrator (29 and 30 respectively)' and an OR-gate (31 and 32 respectively) arranged downstream thereof such that one input of the OR-gate (31 or 32) is linked to the output of the multivibrator (29 or 30) and the other input, parallel with the input of the multivibrator (29 or 30), is linked to the output of an amplifier (27 or 28) of the electronic regulator associated with the respective channel (I or II).

3. Speed-limiting means according to Claim 2, characterized in that there are associated with the multivibrators (29, 30) means (36, 37) for varying the pulse duration.

## Revendications

1. Dispositif de limitation de vitesse pour véhicules automobiles avec un organe de réglage (4) qui est entraîné par un servomoteur (3) et qui agit, par l'intermédiaire de moyens d'accouplement (13), indépendamment d'un actionnement de la pédale d'accélérateur (14), dans le sens d'une modification de la course d'accélérateur, sur le dispositif de dosage de carburant (15) du véhicule correspondant, ainsi qu'avec un régulateur électronique qui réalise, par l'intermédiaire de deux canaux (I, II) séparés, associés à la marche avant et arrière dudit servomoteur (3), une attaque, en fonction du déplacement du véhicule, d'un circuit d'exploitation (33) dudit servomoteur (3), caractérisé par le fait qu'à chaque canal (I, II) émanant du régulateur électronique est associé un circuit de temporisation (29, 30) pouvant être commandé par les signaux d'action et commutant, par rapport au servomoteur (3), une tension de démarrage minimale.

2. Dispositif de limitation de vitesse selon la revendication 1, caractérisé par le fait que dans chaque canal (I, II) est inséré un multivibrateur monostable (29 ou 30) et une porte OU (31 ou 32) montée en aval de ce dernier, de telle sorte que l'une des entrées de la porte OU (31 ou 32) soit reliée à la sortie du multivibrateur (29 ou 30) et que l'autre entrée soit reliée, en parallèle avec l'entrée dudit multivibrateur (29 ou 30), à la sortie d'un amplificateur (27 ou 28) associé au canal respectif (I ou II) du régulateur électronique.

3. Dispositif de limitation de vitesse selon la revendication 1, caractérisé par le fait qu'aux multivibrateurs (29, 30) sont associés des moyens (36, 37) pour la variation de la durée d'impulsion.

FIG. 4

FIG. 1

FIG.2

$$T_1 = f(X_W)$$

$$T_2 = k\,RC$$

$$T_3 = T_2 + \Delta T$$

FIG. 3